# EUROPEAN PATENT APPLICATION

(11) **EP 2 546 963 A2**
(43) Date of publication of application: **16.01.2013**
(21) Application number: 12174879.2
(22) Date of filing: 04.07.2012
(51) Int. Cl.: H02K 11/00

(54) **Motor**

(30) Priority: 11.07.2011 JP 2011152912
(71) Applicant: JTEKT CORPORATION, Osaka-shi Osaka 542-8502 (JP)
(72) Inventor: Takei, Tomoyuki, Osaka-shi,, Osaka 542-8502 (JP); Matsubara, Ken, Osaka-shi,, Osaka 542-8502 (JP); Kitahata, Kouji, Osaka-shi,, Osaka 542-8502 (JP)
(74) Representative: Winter, Brandl, Fürniss, Hübner, Röss, Kaiser, Polte - Partnerschaft

(57) **Abstract**

A motor includes: a rotary shaft (12); a rotor (13) that is provided on the rotary shaft (12) so as to be rotatable together with the rotary shaft (12); a stator (14) that is provided radially outward of the rotor (13); a housing (11) that supports the stator (14); a resolver (15) that has a resolver rotor (35) rotatable together with the rotary shaft (12) and a resolver stator (34) radially facing the resolver rotor (35); and a resolver unit (21) that is an assembly component including the resolver stator (34). The resolver unit (21) includes a bearing (20) that rotatably supports the rotary shaft (12) and a case member (41) that has a first fitting portion (46) to which the resolver stator (34) is fitted and a second fitting portion (47) to which the bearing (20) fitted and that is detachably connected to the housing (11). At least part of the resolver unit (21) is arranged on a radially inner side of the rotor (13).

## Description

### BACKGROUND OF THE INVENTION

### 1. Field of the Invention

The invention relates to a motor.

### 2. Discussion of Background

JP H01-171563U describes a motor with a resolver. The motor includes a rotary shaft, a motor rotor that is provided on the rotary shaft so as to be rotatable together with the rotary shaft, a motor stator that is provided radially outward of the motor rotor, a housing that supports the motor stator, and a resolver that has a resolver rotor that is rotatable together with the rotary shaft and a resolver stator that faces the resolver rotor in the radial direction.

The motor described in JP H01-171563U is configured such that the motor rotor and the resolver rotor are arranged on the rotary shaft so as to be next to each other in the axial direction. Furthermore, bearings that support the rotary shaft are also arranged so as to be next to each other in the axial direction, together with the motor rotor and the resolver rotor. A space in which these components are arranged next to each other needs to be secured on the rotary shaft. This increases the axial sizes of the rotary shaft, the housing, and the like. Particularly, a motor of this type is mounted in hybrid vehicles and electric vehicles that become widespread in recent years, so there is a strong demand to reduce the size of the motor in order to arrange the motor in a limited space.

### SUMMARY OF THE INVENTION

The invention provides a motor with reduced axial size.

According to a feature of an example of the invention, at least part of a resolver unit is arranged on a radially inner side of a motor rotor, so it is possible to reduce the axial size of the motor by the size of the resolver unit arranged on the radially inner side of the motor rotor.

According to another feature of an example of the invention, a peripheral surface of a resolver stator has a plurality of bulge portions that bulge radially and that are formed at intervals in a circumferential direction, and the resolver stator is press-fitted at positions at which the bulge portions are formed. Thus, it is possible to appropriately set a clearance between the resolver stator and the resolver rotor, so it is possible to ensure the detection accuracy of the rotation angle of the rotary shaft.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a sectional view of a motor according to a first embodiment of the invention;
FIG. 2 is a front view that shows a resolver stator;
FIG. 3 is a front view that shows a resolver stator according to an alternative embodiment;
FIG. 4 is a sectional view of a motor according to a second embodiment of the invention; and
FIG. 5 is a front view that shows a resolver stator.

### DETAILED DESCRIPTION OF EMBODIMENTS

Hereinafter, embodiments of the invention will be described with reference to the accompanying drawings.

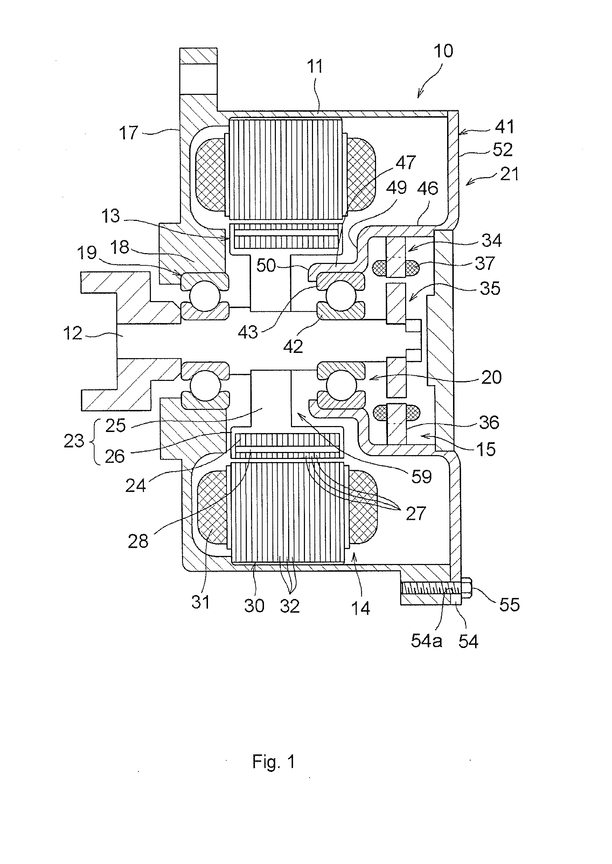

FIG. 1 is a sectional view of a motor 10 according to a first embodiment of the invention. The motor 10 includes a housing 11, a rotary shaft 12, a motor rotor 13, a motor stator 14, a resolver 15, and the like.

The housing 11 is formed in a cylindrical shape of which one axial side portion is open. A side wall 17 provided at the other axial side portion has a bearing support portion 18. The rotary shaft 12 is rotatably supported by a first bearing 19 fitted in the bearing support portion 18. In addition, the rotary shaft 12 is also rotatably supported by a second bearing 20. The second bearing 20 is one component element of a resolver unit 21 (described later).

The motor rotor 13 is provided at an axially middle portion of the rotary shaft 12 so as to be rotatable together with the rotary shaft 12. The motor rotor 13 is formed of a holder member 23 and a rotor core 24 that is supported by the holder member 23. The holder member 23 has a coupling portion 25 and a holding portion 26. The coupling portion 25 is fixed to the rotary shaft 12, and extends in the radial direction. The holding portion 26 is provided at the radially outer end of the coupling portion 25. The rotor core 24 is held by the holding portion 26. The rotor core 24 is formed by embedding a plurality of permanent magnets 28, which are arranged in the circumferential direction, in electromagnetic steel sheets 27 stacked in the axial direction.

The motor stator 14 has a stator core 30 and coils 31 that are wound around the stator core 30. The stator core 30 is formed of a plurality of electromagnetic steel sheets 32 stacked in the axial direction, and is fixed to the inner peripheral surface of the housing 11. In addition, the stator core 30 is provided so as to surround the radially outer side of the rotor core 24.

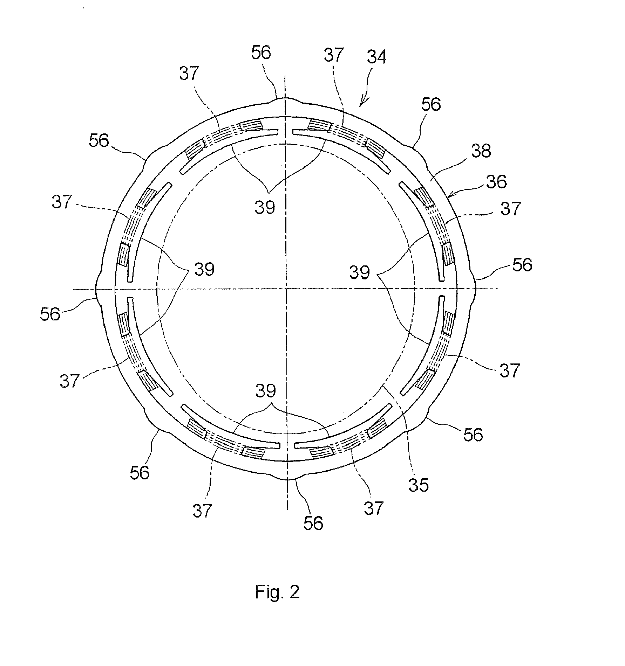

The resolver 15 includes a resolver stator 34 and a resolver rotor 35. As shown in FIG. 2, the resolver stator 34 is formed in an annular shape, and includes a stator core 36 and coils 37. The stator core 36 is formed by stacking a plurality of electromagnetic steel sheets in the axial direction. The stator core 36 has an annular portion 38 having an annular shape and a plurality of (eight in the illustrated example) teeth 39 that are formed integrally with the annular portion 38 and that protrude radially inward from the inner peripheral surface of the annular portion 38. The plurality of teeth 39 are formed at regular intervals in the circumferential direction. In addition, coils 37 for exciting and output are wound around each of the teeth 39. Although not shown in the drawing, an insulator is provided between the teeth 39 and the coils 37. The insulator electrically insulates the teeth 39 and the coils 37 from each other.

As shown in FIG. 1, the resolver rotor 35 is formed in an annular shape, and the inner peripheral side of the resolver rotor 35 is fixed to the rotary shaft 12. In addition, as indicated by the alternate long and two short dashes line in FIG. 2, the outer peripheral surface of the resolver rotor 35 is formed in a substantially elliptical shape in front view (axial view), and faces the teeth 39 of the resolver stator 34 with a clearance. When the rotary shaft 12 rotates, the resolver rotor 35 rotates together with the rotary shaft 12, and the amount of clearance between each tooth 39 of the resolver stator 34 and the resolver rotor 35 changes. When alternating current is supplied to the exciting coils 37 of the resolver stator 34, outputs corresponding to changes in the amount of the clearance occur in the respective output coils 37. The rotation angle of the rotary shaft 12 is detected on the basis of the outputs. The exciting coils 37 are provided on all the teeth 39. The output coils 37 include SIN output coils and COS output coils. The SIN output coils and the COS output coils are alternately provided on the plurality of teeth 39 in the circumferential direction. The amplitude of output voltage of each SIN output coil and the amplitude of output voltage of each COS output coil change with a phase difference of 90°. The rotation angle of the rotary shaft 12 is detected by subjecting the output voltages to signal processing.

The resolver stator 34 that constitutes the resolver 15 and the second bearing 20 that supports the rotary shaft 12 are connected to a case member 41. These components constitute the resolver unit 21 as one assembly component. An outer ring 43 of the second bearing 20 is fixed to the case member 41. An inner ring 42 of the second bearing 20 is fixed to the rotary shaft 12.

The case member 41 has a first fitting portion 46 and a second fitting portion 47. The resolver stator 34 is fitted to the first fitting portion 46. The outer ring 43 of the second bearing 20 is fitted to the second fitting portion 47. The first fitting portion 46 is formed in a cylindrical shape. The outer peripheral surface of the resolver stator 34 is fixedly fitted to the first fitting portion 46 by press-fitting. In addition, the second fitting portion 47 is also formed in a cylindrical shape. The outer peripheral surface of the outer ring 43 is fixedly fitted to the inner peripheral surface of the second fitting portion 47 by press-fitting.

The second fitting portion 47 has a smaller diameter than the first fitting portion 46. A disc portion 49 is formed between the second fitting portion 47 and the first fitting portion 46, and extends in the radial direction. In addition, an inner flange portion 50 that extends radially inward is formed at one axial end portion of the second fitting portion 47 (the end portion of the second fitting portion 47 on the opposite side of the first fitting portion 46 in the axial direction, that is, the left end portion of the second fitting portion 47 in FIG. 1).

An outer flange portion 52 that extends radially outward is formed at the other axial end portion of the first fitting portion 46 (the end portion of the first fitting portion 46 on the opposite side of the second fitting portion 47 in the axial direction, that is, the right end portion of the first fitting portion 46 in FIG. 1). The first fitting portion 46, the second fitting portion 47, the disc portion 49, the inner flange portion 50 and the outer flange portion 52 are formed by subjecting a single-piece metal sheet to plastic working, such as press working (drawing).

The inner flange portion 50 functions as a restricting portion that restricts the axial position of the outer ring 43 fitted to the second fitting portion 47. In addition, the outer flange portion 52 is formed all around the first fitting portion 46, and functions as a wall portion that closes the opening of the one axial side portion of the housing 11. Flange portions 54 that protrude radially outward are formed at the outer peripheral portion of the outer flange portion 52 at multiple portions aligned in the circumferential direction. The flange portions 54 are fixed to the axial end face of the housing 11 with bolts 55. Note that bolt holes 54a respectively formed in the flange portions 54 may be arc-shaped oblong holes centering on the axis of the rotary shaft 12. Thus, the circumferential position of the resolver stator 34 is adjusted to make it possible to easily make a zero point adjustment with respect to the resolver rotor 35.

As shown in FIG. 2, a plurality of bulge portions 56 are formed on the outer peripheral surface of the stator core 36 of the resolver stator 34 at regular intervals in the circumferential direction. Each of the bulge portions 56 is formed in an arc shape having a radius smaller than the radius of the outer peripheral surface of the stator core 36, other than the bulge portions 56. In addition, the stator core 36 according to the present embodiment has eight bulge portions 56, that is, the number of the bulge portions 56 is equal to the number of the teeth 39. The respective bulge portions 56 are arranged at circumferential positions corresponding to portions between the plurality of teeth 39. Note that, in FIG. 2, for the sake of easy understanding of the shape of each bulge portion 56, each bulge portion 56 bulges radially outward by a large amount; however, each bulge portion 56 actually just slightly bulges from the outer peripheral surface of the stator core 36.

As shown in FIG. 1, the stator core 36 of the resolver stator 34 is fitted to the case member 41 when the outer peripheral surface of the stator core 36 is fitted to the inner peripheral surface of the first fitting portion 46 of the case member 41. Because the bulge portions 56 are formed on the outer peripheral surface of the stator core 36, the stator core 36 is press-fitted to the first fitting portion 46 by interference fit at the positions of the bulge portions 56. In addition, the outer peripheral surface of the stator core 36, other than the bulge portions 56, is fitted to the first fitting portion 46 by clearance fit. Therefore, the bulge portions 56 form an interference with respect to the first fitting portion 46.

In the case where the entire outer peripheral surface of the stator core 36 of the resolver stator 34 is press-fitted to the first fitting portion 46, for example, when there is a deformation or dimension error in part of the inner peripheral surface of the first fitting portion 46, the radial position of the tooth 39 of the stator core 36 changes at that portion, and the clearance between the resolver stator 34 and the resolver rotor 35 is not appropriately set partially in the circumferential direction. As a result, it is difficult to accurately detect the rotation angle of the rotary shaft 12. That is, there is an inconvenience that the roundness of the inner peripheral surface of the first fitting portion 46 significantly influences the detection accuracy of the rotation angle. In contrast to this, in the case of the present embodiment, only the portions of the outer peripheral surface of the stator core 36, at which the bulge portions 56 are formed, are press-fitted to the fitting portion 46. Therefore, it is possible to decrease the probability of occurrence of the above-described inconvenience.

In addition, in the present embodiment, the bulge portions 56 are formed at circumferential positions corresponding to the portions between the plurality of teeth 39. Therefore, even when the stator core 36 is pushed radially inward by the inner peripheral surface of the first fitting portion 46, the radial positions of the teeth 39 are nearly unchanged. Thus, the clearance between the teeth 39 and the resolver rotor 35 is appropriately set, and the detection accuracy of the rotation angle is maintained. In addition, each portion between the teeth 39 of the stator core 36 has a small radial thickness, and elastically deforms easily in the radial direction. Therefore, even when there is a deformation or dimension error in the inside diameter of the first fitting portion 46, the deformation or dimension error is appropriately absorbed, and the stator core 36 is further reliably press-fitted to the first fitting portion 46.

In addition, in the present embodiment, as shown in FIG. 1, the outer flange portion 52 is formed on the outer peripheral portion of the first fitting portion 46 to increase the stiffness of the first fitting portion 46. Thus, it is possible to sufficiently ensure the press-fitting load of the stator core 36 of the resolver stator 34 (clamp load by the first fitting portion 46). In addition, because the outer flange portion 52 is formed on the outer peripheral portion of the first fitting portion 46, it is possible to increase the dimension accuracy of the case member 41 that is formed by press working, particularly, the dimension accuracy of the fitting portion 46.

Because the case member 41 has the disc portion 49 between the first fitting portion 46 and the second fitting portion 47, fitting of the resolver stator 34 to the first fitting portion 46 and fitting of the second bearing 20 to the second fitting portion 47 do not influence each other. For example, even when a deformation, or the like, is caused in the second fitting portion 47 by fitting the second bearing 20 to the second fitting portion 47, the influence of the deformation, or the like, is hardly exerted on the first fitting portion 46, and the amount of clearance between the teeth 39 of the resolver stator 34 and the resolver rotor 35 does not become inappropriate.

The first fitting portion 46, the second fitting portion 47, the disc portion 49, the inner flange portion 50 and the outer flange portion 52 that constitute the case member 41 are formed by subjecting a single-piece metal sheet to press working. Therefore, the case member 41 is easily manufactured. In addition, the resolver 15 according to the present embodiment is formed such that the resolver stator 34 and the second bearing 20 are assembled into one unit by the case member 41. Therefore, in comparison with the case where the resolver stator 34 and the second bearing 20 are formed as separate members, the resolver 15 and the second bearing 20 are easily handled and easily fitted to the housing 11 and the rotary shaft 12. In addition, if the resolver stator 34 and the second bearing 20 are assembled into one unit, the axis of the resolver stator 34 accurately coincides with the axis of the second bearing 20. It is possible to increase the accuracy of assembling the resolver stator 34 to the rotary shaft 12, which is fitted to the second bearing 20, and the resolver rotor 35, which is fitted to the rotary shaft 12.

The inner peripheral portion of the motor rotor 13 has a recess 59. The recess 59 is formed between the coupling portion 25 and holding portion 26 of the holder member 23, and is open at the one axial side portion (right side portion) of the motor rotor 13. The second bearing 20 that constitutes the resolver unit 21 and the second fitting portion 47 of the case member 41 are inserted in the recess 59. That is, the second bearing 20 that is part of the resolver unit 21 and the second fitting portion 47 are arranged on the radially inner side of the motor rotor 13. Furthermore, the motor rotor 13, the second bearing 20 that constitutes the resolver unit 21, and the second fitting portion 47 of the case member 41 are arranged so as to be overlapped in the axial direction of the motor rotor 13. With the above configuration, the axial size of the motor 10 is reduced. Therefore, it is possible to reduce the mounting space for the motor 10, which needs to be ensured in a system in which the motor 10 is mounted, such as a hybrid vehicle and an electric vehicle.

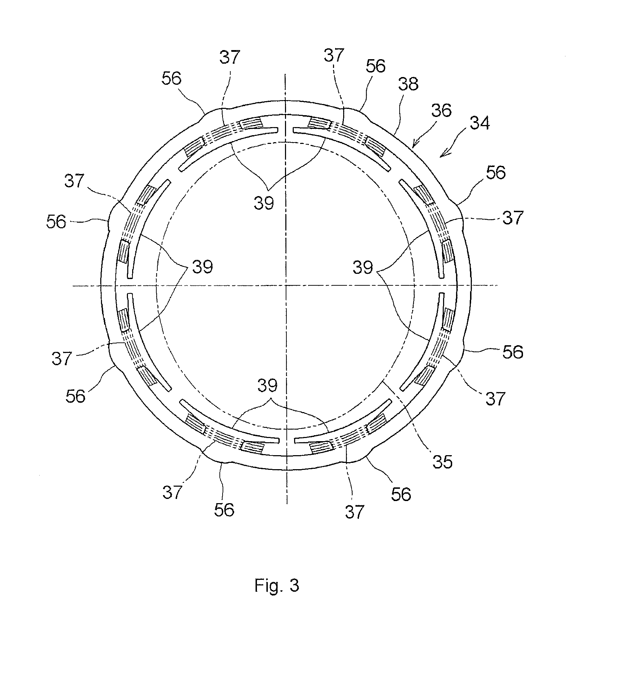

Note that, as shown in FIG. 3, the bulge portions 56 formed on the stator core 36 of the resolver stator 34 may be arranged at circumferential positions corresponding to the positions at which the teeth 39 are formed. In this case, the following operation and advantageous effects are obtained.

Because the portions of the stator core 36, at which the teeth 39 are formed, have a large thickness in the radial direction of the stator core 36 and have a high stiffness, the portions are less likely to be deformed in the radial direction. Therefore, there is an advantage that it is possible to sufficiently ensure press-fitting load on the first fitting portion 46 by forming the bulge portions 56 at the circumferential positions corresponding to the portions at which the teeth 39 are formed. In addition, the bulge portions 56 are formed at portions having a relatively small magnetic flux density generated in the resolver stator 34. Therefore, it is possible to suppress a decrease in detection signal level due to formation of the bulge portions 56.

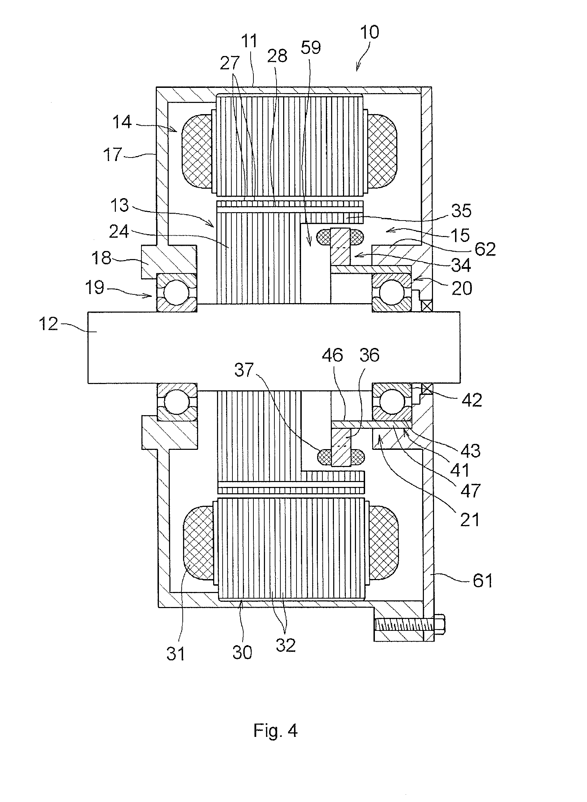

FIG. 4 is a sectional view of a motor 10 according to a second embodiment of the invention. The motor 10 according to the present embodiment, as in the case of the first embodiment, includes the housing 11, the rotary shaft 12, the motor rotor 13, the motor stator 14, the resolver 15, and the like.

The housing 11 is formed in a cylindrical shape of which one axial side portion (right side portion) is open. The side wall 17 provided at the other axial side portion has the bearing support portion 18. The rotary shaft 12 is rotatably supported by the first bearing 19 fitted in the bearing support portion 18. In addition, the rotary shaft 12 is also rotatably supported by the second bearing 20. The second bearing 20 is one component element of the resolver unit 21.

The motor rotor 13 is provided at the axially middle portion of the rotary shaft 12 so as to be rotatable together with the rotary shaft 12. The rotor core 24 of the motor rotor 13 is fitted to the rotary shaft 12 so as to be rotatable together with the rotary shaft 12. As in the case of the first embodiment, the rotor core 24 is formed by embedding a plurality of permanent magnets 28, which are arranged in the circumferential direction, in the electromagnetic steel sheets 27 stacked in the axial direction. The inner peripheral portion of the rotor core 24 has the recess 59. The recess 59 is open at one axial side portion (right side portion) of the rotor core 24. The configuration of the motor stator 14 is the same as that in the first embodiment, so the detailed description is omitted.

The case member 41 of the resolver unit 21 is formed in a cylindrical shape such that the inside diameter and the outside diameter are constant. One axial end portion of the case member 41 serves as the second fitting portion 47. The outer ring 43 of the second bearing 20 is fitted to the second fitting portion 47. The other axial end portion of the case member 41 serves as the first fitting portion 46. The resolver stator 34 is fitted to the first fitting portion 46. Note that the case member 41 is connected to a cylindrical unit holding portion 62 that is formed on a wall portion 61. The wall portion 61 is detachably attached to the housing 11, and closes the one axial side portion (right side portion) of the housing 11.

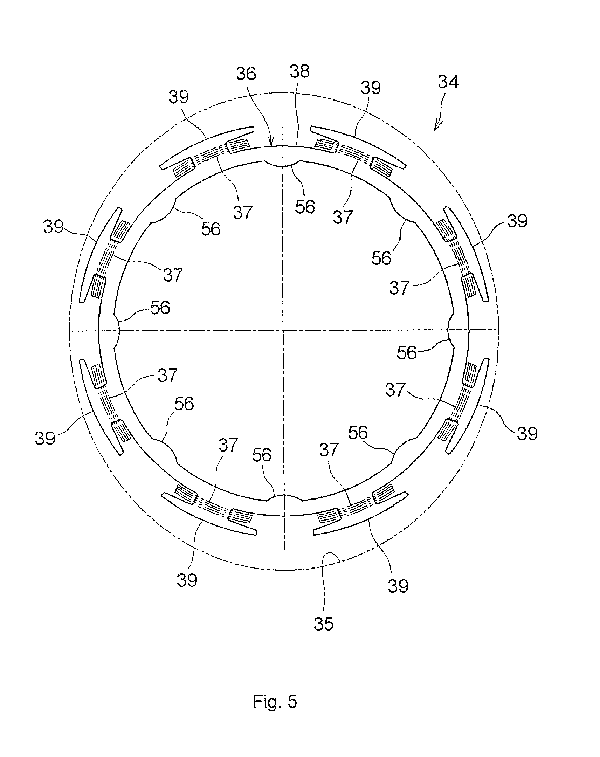

As shown in FIG. 5, the resolver stator 34 according to the present embodiment has the stator core 36 and the coils 37 as in the case of the first embodiment. However, the stator core 36 according to the present embodiment is formed such that a plurality of (eight in the illustrated example) teeth 39 that protrude radially outward are formed integrally on the outer peripheral surface of the annular portion 38 having an annular shape. The plurality of teeth 39 are formed at regular intervals in the circumferential direction. The exciting coil 37 and the output coil 37 are wound around each of the teeth 39.

In addition, bulge portions 56 substantially similar to those in the first embodiment, of which the number is equal to the number (eight) of the teeth 39, are formed on the inner peripheral surface of the annular portion 38 of the stator core 36, and the bulge portions 56 are arranged at circumferential positions corresponding to portions between the plurality of teeth 39. Thus, in the present embodiment as well, the stator core 36 is press-fitted to the first fitting portion 46 by interference fit at the positions of the bulge portions 56. In addition, the inner peripheral surface of the stator core, other than the bulge portions 56, is fitted to the first fitting portion 46 by clearance fit. Thus, the bulge portions 56 form an interference with respect to the first fitting portion 46.

As shown in FIG. 4, the resolver stator 34 is inserted in the recess 59 formed in the motor rotor 13, and the teeth 39 face the inner peripheral surface of the motor rotor 13, which defines the recess 59. That is, the resolver stator 34 that is part of the resolver unit 21 is positioned on the radially inner side of the motor rotor 13. In the present embodiment, the inner peripheral portion of the motor rotor 13, which defines the recess 59, functions as the resolver rotor 35. That is, as shown in FIG. 5, the inner peripheral surface of the resolver rotor 35 is formed in a substantially elliptical shape, and faces the teeth 39 of the resolver stator 34 with a clearance. When the rotary shaft 12 rotates, the resolver rotor 35 also rotates together with the rotary shaft 12, and the amount of the clearance between the teeth 39 of the resolver stator 34 and the resolver rotor 35 change. Thus, it is possible to detect the rotation angle of the rotary shaft 12.

In the present embodiment as well, as in the case of the first embodiment, part of the resolver unit 21 is inserted in the recess 59 of the inner peripheral portion of the motor rotor 13. Thus, it is possible to reduce the axial size of the motor 10. Furthermore, in the present embodiment, the motor rotor 13 functions as the resolver rotor 35, so it is possible to reduce the number of components and manufacturing cost.

The invention is not limited to the above-described embodiments. The above-described embodiments may be modified in design where appropriate.

For example, in the second embodiment, the motor rotor 13 itself constitutes the resolver rotor 35. When the motor rotor 13 includes the holder member 23 as in the case of the first embodiment, a separate resolver rotor 35 may be fitted to the inner peripheral surface of the holding portion 26 of the holder member 23.

In the above embodiments, the bulge portions 56 formed on the resolver stator 34 are equal in number (eight) to the teeth 39. As long as the resolver stator 34 is appropriately press-fitted to the first fitting portion 46, the number of the bulge portions 56 may be smaller or larger than the number of the teeth 39. However, in order to stably fit the resolver stator 34 to the first fitting portion 46, the number of the bulge portions 56 is desirably three or more, and, in addition, the bulge portions 56 next to each other in the circumferential direction are desirably arranged at an interval of a central angle smaller than 180°.

In addition, the invention may be applied to a motor in which no bulge portions 56 are formed on the resolver stator 34.

In addition, the invention may be applied to a device, other than a motor, that has the function of one of a motor and a generator or the functions of both of a motor and a generator.

## Claims

1. A motor including: a rotary shaft; a rotor that is provided on the rotary shaft so as to be rotatable together with the rotary shaft; a stator that is provided radially outward of the rotor; a housing that supports the stator; and a resolver that has a resolver rotor that is rotatable together with the rotary shaft and a resolver stator that radially faces the resolver rotor, further comprising
a resolver unit that is an assembly component including the resolver stator, wherein
the resolver unit includes:
a bearing that rotatably supports the rotary shaft; and
a case member that has a first fitting portion to which the resolver stator is fitted and a second fitting portion to which the bearing is fitted and which is detachably connected to the housing, and
at least part of the resolver unit is arranged on a radially inner side of the rotor.

2. The motor according to claim 1, wherein
an inner peripheral portion of the rotor has an annular recess of which one axial end side is open, and
the resolver rotor is provided at the inner peripheral portion of the rotor, which defines the recess, and the resolver stator is arranged in the recess.

3. The motor according to claim 2, wherein
the rotor and the resolver stator are arranged so as to be overlapped in a direction along the rotary shaft.

4. The motor according to claim 2, wherein
the inner peripheral portion of the rotor, which defines the recess, constitutes the resolver rotor.

5. The motor according to any one of claims 1 to 4, wherein
a peripheral surface of the resolver stator fitted to the first fitting portion has a plurality of bulge portions that bulge radially and that are formed at intervals in a circumferential direction, and an outer peripheral surface of the resolver stator is fitted to an inner peripheral surface of the first fitting portion by press-fitting at positions at which the bulge portions are formed.

6. The motor according to claim 5, wherein
the resolver stator has a plurality of teeth arranged in the circumferential direction, the plurality of teeth facing the peripheral surface of the resolver rotor with a clearance, and
the bulge portions are formed at circumferential positions corresponding to portions between the plurality of teeth in the resolver stator.

7. The motor according to claim 5, wherein
the resolver stator has a plurality of teeth arranged in the circumferential direction, the plurality of teeth facing the peripheral surface of the resolver rotor with a clearance, and
the bulge portions are formed at circumferential positions corresponding to portions at which the teeth are formed in the resolver stator.
